# EUROPÄISCHE PATENTSCHRIFT

(11) **EP 1 127 908 B1**
(45) Veröffentlichungstag und Bekanntmachung des Hinweises auf die Patenterteilung: **13.07.2005**
(21) Anmeldenummer: 01810143.6
(22) Anmeldetag: 12.02.2001
(51) Int. Cl.: C08G 18/66, C09K 21/14, C08J 9/00

(54) **Zweikomponenten-Ortschaumsystem und dessen Verwendung zum Ausschäumen von Öffnungen zum Zwecke des Brandschutzes**
Two component local foaming system and its use for filling cavities for the purpose of fire-protection
Système moussant local à deux composants et son utilisation pour le remplissage de cavités en vue de la protection Antiincendie

(30) Priorität: 22.02.2000 DE 10007980
(43) Veröffentlichungstag der Anmeldung: 29.08.2001
(73) Patentinhaber: HILTI Aktiengesellschaft, 9494 Schaan (LI)
(72) Erfinder: Münzenberger, Herbert, 65191 Wiesbaden (DE); Heimpel, Franz, 86444 Affing (DE); Rump, Stefan, 86899 Landsberg (DE); Förg, Christian, 86807 Buchloe (DE); Lieberth, Wolfgang, 86916 Kaufering (DE)
(74) Vertreter: Wildi, Roland

(56) Entgegenhaltungen:
- EP-A- 0 217 080
- DE-A- 19 544 121
- FR-A- 2 283 203
- US-A- 4 237 238

## Beschreibung

Intumeszierende Polyurethanschäume für Brandschutzzwecke sind seit Jahren bekannt und finden Verwendung als Polster für Sitze in Flugzeugen. Zügen und Bussen sowie in der Möbelindustrie, aber auch als Dämmmaterialen für den Verschluß von Öffnungen, Durchbrüchen, Rohr- und Kabeldurchfuhrungen in Wänden, Böden, Decken, namentlich Brandwanden, sowie als Fugenbander, um im Brandfall eine Ausbreitung des Feuers durch diese Öffnungen oder Fugen zu verhindern. Für die Herstellung solcher intumeszierender Schäume gibt es im wesentlichen die Methode des nachtraglichen Impragnierens des Schaums durch Einwalken von Additiven, die Einarbeitung von chemisch intumeszierenden Additiven, hauptsächlich auf Basis von Phosphaten, Melamin, Kohlenstoff liefernden Substanzen und dergleichen während der Schaumherstellung sowie das Einarbeiten von Blähgraphit während der Schaumherstellung, gegebenenfalls unter Verwendung zusätzlicher Additive.

So beschreibt die Europäische Patentschrift 0 400 402 Brandschutzelemente auf der Grundlage von Polyurethanschaumstoffen, die Blahgraphit, phosphorhaltige Polyole, Borate und Melamin- und/oder Ethylendiaminsalze enthalten und gegebenenfalls zusätzlich und üblicherweise brandwidrig ausgerüstet sind und/oder übliche brandwidrige Zusatzstoffe, Füllstoffe oder Hilfsstoffe enthalten. Diese Brandschutzelemente werden als Konstruktionsmaterialien eingesetzt, indem man den Polyurethanschaumstoff aushärtet und aus dem ausgeharteten Material das Konstruktionselement in der jeweils gewünschten Form ausarbeitet, so daß diese Trennelemente vor Ort gegebenenfalls unter Anwendung von Klebstoffen aus Einzelstücken zusammengefügt und eingebaut werden können. Die erhaltenen Schaumstoffe besitzen ein Raumgewicht von > 200 kg/m³.

Bei diesen und bei sämtlichen anderen bekannten Schaumsystemen für den vorbeugenden Brandschutz handelt es sich um maschinell gefertigte Formteile oder zugeschnittene Blockschaume, die als fertige Formteile auf der Baustelle eingebaut werden müssen, was eine entsprechende Lagerhaltung oder entsprechende Kosten für die Anpassung erforderlich macht.

Aus der DE-A-38 28 544 und der EP-B-0 192 888 sind bereits flammgeschützte Polyurethan-Weichschaumstoffe für Polsterzwecke bekannt, die zur Verbesserung ihrer Flammschutzeigenschaften Blahgraphit und andere Additive zur Erzeugung einer Intumeszenzkruste enthalten, um dadurch eine Isolierung zu erreichen und die Abbrandrate zu verzögern. Diese Polsterschaume besitzen normalerweise ein Raumgewicht von weniger als 100 kg/m³ (meist etwa 50 kg/m³) und werden großtechnisch nach dem REM-Verfahren (Reaction Injection Mode) hergestellt. Sie besitzen jedoch nicht die für Rohr- und Kabeldurchführungen erforderliche Feuerwiderstandsdauer von zwei Stunden bei einer Einbautiefe von 100 mm.

Die Aufgabe der vorliegenden Erfindung besteht nun darin, ein intumeszierendes Schaumsystem anzugeben, das sich vor Ort auf der Baustelle ohne Maschineneinsatz einfach und mit hoher Schaumausbeute (bei einer Dichte von weniger als 200 kg/m³) verarbeiten läßt und einen Brandschutzschaum mit erhöhter Feuerwiderstandsdauer ergibt.

Diese Aufgabe wird nun gelost durch das Zweikomponenten-Ortschaumsystem gemäß Anspruch 1. Die Unteransprüche betreffen bevorzugte Ausführungsformen dieses Gegenstandes sowie die Verwendung dieses Zweikomponenten-Ortschaumsystems zum Ausschäumen von Öffnungen, Kabel- und Rohrdurchführungen in Wänden, Böden und/oder Decken von Gebäuden zum Zwecke des Brandschutzes.

Es hat sich überraschenderweise gezeigt, daß man beim Umsetzen einer Polyol-Komponente, die mindestens ein Polyesterpolyol, mindestens ein Aminopolyol, mindestens ein halogenhaltiges, vorzugsweise bromiertes Polyol, mindestens einen Saurebildner, Blähgraphit und mindestens einen Aschekrustenstabilisator enthält, mit einer Polysocyanat-Komponente in einem Molverhältnis von Isocyanatgruppen . OH-Gruppen von größer als 1 : 1 ein Schaumsystem erhält, das im Brandfall nicht oder nur wenig intumesziert und dabei eine stabile Aschekruste bildet, die während des Brandes nicht abgetragen wird. In dieser Weise gelingt es, ohne zusätzliche Hilfsstoffe bei einer Einbautiefe von 100 mm eine Feuerwiderstandsdauer nach ASTM 814 von 3 Stunden zu erreichen und dies mit einem Zweikomponenten-Ortschaumsystem, das vor Ort auf der Baustelle durch Einfuhren der gemischten Komponenten in die zu verschließende Öffnung gebildet wird.

Die Erfindung betrifft daher ein Zweikomponenten-Ortschaumsystem zur Herstellung eines intumeszierenden Brandschutzschaums mit einer Dichte von weniger als 200 kg/m³ und erhöhter Feuerwiderstandsdauer, mit einer Polyol-Komponente (A), die mindestens ein Polyol, einen Katalysator für die Reaktion des Polyols mit dem Polyisocyanat, Wasser oder ein Treibmittel auf der Grundlage eines verdichteten oder verflüssigten Gases als Schaumbildner und mindestens ein intumeszierendes Material auf der Grundlage eines Säurebildners, einer Kohlenstoff liefernden Verbindung und eines Gasbildners enthält, und einer Polyisocyanat-Komponente (B), die mindestens ein Polyisocyanat enthält, das dadurch gekennzeichnet ist, daß die Polyol-Komponente (A) mindestens ein Polyesterpolyol, mindestens ein Aminopolyol, mindestens ein halogenhaltiges Polyol, mindestens einen Säurebildner, Blahgraphit und mindestens einen Aschekrustenstabilisator enthält, wobei die Mengenverhältnisse der Polyole und Polyisocyanate so abgestimmt sind, daß sich beim bestimmungsgemäßen Vermischen der Polyol-Komponente (A) mit der Polyisocyanat-Komponente (B) ein Molverhältnis von Isocyanatgruppen des Polyisocyanats zu OH-Gruppen der Polyole (NCO:OH-Verhältnis) von größer als 1:1 ergibt.

Gemäß einer bevorzugten Ausführungsform der Erfindung enthält die Polyol-Komponente (A) 3 bis 40 Gew.-%, vorzugsweise 5 bis 30 Gew.-% Polyesterpolyol, 3 bis 30 Gew.-%, vorzugsweise 5 bis 20 Gew.-% Aminopolyol, 5 bis 20 Gew.-%, vorzugsweise 10 bis 15 Gew -% halogenhaltiges, vorzugsweise bromiertes Polyol, 5 bis 30 Gew.-%, vorzugsweise 10 bis 20 Gew.-% Säurebildner, 1 bis 20 Gew.-%, vorzugsweise 2 bis 10 Gew.-% Kohlenstoff liefernde Verbindung, 1 bis 10 Gew.-%, vorzugsweise 5 bis 8 Gew.-% mindestens einer Melaminverbindung als Gasbildner und 10 bis 40 Gew.-% Blähgraphit.

Als Polyesterpolyol verwendet man vorzugsweise eines mit einer Funktionalität von 1,5 bis 5 und einer OH-Zahl von 100 bis 700. Das Aminopolyol besitzt vorzugsweise eine Funktionalität von 2 bis 5 und eine OH-Zahl von 200 bis 700, während das halogenhaltige, vorzugsweise bromierte Polyol vorzugsweise eine Funktionalität von 2 bis 5 und eine OH-Zahl von 100 bis 500 aufweist, während die Polyisocyanat-Komponente (B) mit Vorteil ein Polyisocyanat mit einer Funktionalität von > 2 und einem NCO-Gehalt von 20 bis 40% enthält. Solche Polyole sind dem Fachmann bekannt und im Handel erhältlich.

Die Polyisocyanat-Komponente (B) enthält als Polyisocyanat üblicherweise die für Polyurethanschaumstoffe eingesetzten Materialien, wie beispielsweise aliphatische, cycloaliphatische, araliphatische, aromatische oder heterocyclische Polyisocyanate, insbesondere 4,4'-Methylendi(phenylisocyanat). Toluylendiisocyanat, Isopropyldiisocyanat, Hexamethylendiisocyanat, oder eines der üblichen Isocyanat-Präpolymere.

Die Polyol-Komponente (A) kann zusätzlich Dietherpolyole, OH-terminiertes Polybutadien und/oder Polyethylenglycol enthalten.

Erfindungsgemaß verwendet man als Säurebildner ein Salz oder einen Ester einer anorganischen, nicht flüchtigen Säure, ausgewählt aus Schwefelsäure, Phosphorsaure oder Borsäure. Besonders bevorzugte Saurebildner sind Ammoniumphosphat, Ammoniumpolyphosphat, Diaminphosphate, Ester der Phosphorsaure mit Polyolen, wie Pentaerythrit, Melaminphosphate, wie Melaminorthophosphat, Dimelaminorthophosphat, Dimelaminpyrophosphat oder Melaminpolyphosphat, Borsäuresalze, wie Melaminborat, und/oder Borsäureester.

Die Polyol-Komponente (A) enthält vorzugsweise 1 bis 20 Gew.-%, bevorzugter 2,5 bis 10 Gew.-% des Aschekrustenstabilisators, wozu vorzugsweise ein teilchenformiges Metall aus der Aluminium, Magnesium, Eisen und Zink umfassenden Gruppe eingesetzt wird. Es hat sich überraschenderweise gezeigt, daß die Zugabe eines solchen teilchenformigen Metalls zu einer wesentlichen Stabilisierung der Intumeszenzkruste im Brandfall fuhrt.

Das teilchenformige Metall kann in Form eines Pulvers, von Plättchen. Schuppen, Fasern, Fäden und/oder Whiskers vorliegen, wobei das teilchenformige Metall in Form von Pulver, Plättchen oder Schuppen eine Teilchengroße von ≤ 50 µm, vorzugsweise von 0,5 bis 10 µm besitzt. Im Fall der Verwendung des teilchenförmigen Metalls in Form von Fasern. Faden und/oder Whiskers sind eine Dicke von 0,5 bis 10 µm und eine Länge bis 10 bis 50 µm bevorzugt.

Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C.

Als Kohlenstoff liefernde Verbindung für das intumeszierende Material verwendet man vorzugsweise eine Polyhydroxyverbindung und/oder ein thermoplastisches oder duroplastisches polymeres Harzbindemittel, wie Kohlenhydrate, beispielsweise Zucker oder Stärke, Pentaerythrit, Dipentaerythrit, Phenolharze, Harnstoffharze, Polyurethane, Polyvinylchlorid, Poly(meth)acrylate, Polyvinylacetat, Polyvinylalkohol, Silikonharze, Polybutadiene, Polybutene und/oder Kautschuke.

Als Gasbildner für das intumeszierende Material verwendet man mit Vorteil Chlorparaffine, Melamin, Melaminverbindungen, insbesondere Melamincyanurat, Melaminphosphat, Melaminpolyphosphat, Tris(hydroxyethyl)-cyanurat, Dicyandiamid und/oder Guanidinsalze, inbesondere Guanidinphosphat oder Guanidinsulfat.

Die Polyol-Komponente (A) enthält einen üblichen Katalysator für die Reaktion des Polyols mit dem Polyisocyanat, beispielsweise ein aromatisches und/oder aliphatisches sekundares oder tertiäres Amin, eine metallorganische Verbindung eines Metalls aus der Zn, Sn, Mn, Mg, Bi, Sb, Pb und Ca umfassenden Gruppe, insbesondere ein Octoat, Naphthenat oder Acetylacetonat dieser Metalle.

Gemäß einer bevorzugten Ausführungsform der Erfindung enthalten die Polyol-Komponente (A) und/oder die Polyisocyanat-Komponente (B) als Treibmittel auf der Grundlage eines verdichteten oder verflüssigten Gases Luft, Stickstoff, Kohlendioxid, Distickstoffoxid, einen fluorierten Kohlenwasserstoff, wie Freon 134a oder 227, Dimethylether, Butan oder Propan.

Es ist weiterhin möglich, der Polyol-Komponente (A) und/oder der Polyisocyanat-Komponente (B) ein zusätzliches organisches oder anorganisches Flammschutzmittel zuzusetzen. Als Flammschutzmittel sind roter Phosphor, Phosphorverbindungen, insbesondere halogenierte Phosphorsaureester, wie Trichlorethylphosphat, Tris(2-chlorisopropyl)-phosphat, Triphenylphosphat oder Tris(2-chlorethyl)-phosphat, Metallhydroxide, insbesondere Aluminiumhydroxid oder Magnesiumhydroxid, Zinkborat und Ammoniumpolyphosphat, sowie gegebenenfalls Antimonoxid als Synergist geeignet.

Zur Verbesserung der Handhabung und zur Einstellung der Viskosität und der Fließeigenschaften des erfindungsgemäßen Zweikomponenten-Ortschaumsystems beim Vermischen und Ausbringen ist es möglich, ein Thixotropiermittel und/oder ein Verdunnungs- oder Lösemittel zuzusetzen, wie hydrophobe oder hydrophobierte Kieselsäure als Thixotropiermittel und aliphatische Alkohole, wie Butanol, als Lösungsmittel.

Es ist weiterhin möglich, der Polyol-Komponente (A) und/oder der Polyisocyanat-Komponente (B) zusätzlich mindestens einen anorganischen Füllstoff zuzusetzen, wie Metalloxide, Borate, Carbonate, vorzugsweise Kreide, Silikate, Kaolin, Glaspulver, Eisenoxid, Titandioxid, Siliciumdioxid, anorganische Schäume, vorzugsweise geschäumten Blähton, Perlite und Vermiculit, und/oder Hohlkügelchen aus silikatischem Material oder Glas.

Natürlich ist es ohne weiteres möglich, in die Polyol-Komponente (A) und/oder die Polyisocyanat-Komponente (B) die üblicherweise verwendeten und an sich bekannten Hilfs- und Zusatzstoffe einzuarbeiten, wie beispielsweise Stabilisatoren, Weichmacher, Katalysatoren, Losungsmittel und/oder Farbstoffe etc.

Durch entsprechende Auswahl der Bestandteile und Mengenverhältnisse von Polyol-Komponente (A) und Polyisocyanat-Komponente (B) können die Reaktionsgeschwindigkeit, die Viskosität sowie die Vernetzungsdichte des erhaltenen Polyurethanschaums in dem Fachmann in bekannter Weise gezielt eingestellt werden.

Gemäß einer bevorzugten Ausführungsform des erfindungsgemäßen Zweikomponenten-Ortschaumsystems sind die Polyol-Komponente (A) und die Polyisocyanat-Komponente (B) in einer Zwei- oder Mehrkammervorrichtung reaktionsinhibierend getrennt und unter Anwendungsbedingungen unter Einhaltung des NCO : OH-Verhältnisses von größer als 1 : 1 zur Reaktion bringbar enthalten. In dieser Weise gelingt es, die in diesen getrennten Behältern, beispielsweise Kunststoffbeuteln vorliegenden Komponenten in einfacher Weise vor Ort, also auf der Baustelle, zu vermischen und in die zu verschließenden Öffnungen einzubringen und zu der gewünschten Brandabschottung aufzuschäumen und auszuhärten. Hierzu können die beiden Komponenten entweder unter Einwirkung eines in den jeweiligen Behältern vorhandenen Treibmittels oder auch mit Hilfe mechanischer Kräfte aus diesen Behältern ausgepreßt, beispielsweise mit Hilfe eines statischen Mischers vermischt und über eine Sprühdüse in die zu verschließenden Öffnungen eingebracht werden. Dabei ist das bevorzugte Zweikomponenten-Ortschaumsystem aus Zweikomponenten-Kartuschen mit Statikmischern, aus Doppelkammerbeuteln oder aus Zweikomponenten-Aerosoldosen auszubringen. Da der hierbei erhaltene noch nicht ausgehartete Schaum standfest und nicht dünnflüssig ist, läßt er sich auch über Kopf und in Lagen auftragen und ermöglicht eine hermetische Abschottung auch unregelmaßig geformter Öffnungen und die Ausfullung von Interschneidungen, was mit den herkömmlichen vorgefertigten Brandschutz-Formteilen nicht oder nur sehr schwer möglich ist.

Während bei den herkömmlichen intumeszierenden Polyurethan-Schaumformteilen mit einer Schaumdichte von 200 bis 300 kg/m³ für eine Feuerwiderstandsdauer geprüft nach ASTM 814 von 2 Stunden eine Einbautiefe von 200 mm notwendig ist, ermöglicht der erfindungsgemäße Schaum überraschenderweise bei einer sehr viel geringeren Dichte von 130 bis 150 kg/m³ die Feuerwiderstandsdauer von 2 Stunden bereits bei einer Einbautiefe von lediglich 100 mm.

Das folgende Beispiel dient der weiteren Erläuterung der Erfindung.

### Beispiel

Man bereit eine Polyol-Komponente (A) durch Vermischen der folgenden Bestandteile

| | |
|---|---|
| 5 g | Aminopolyol (Voranol RA 800) |
| 49,5 g | Aminopolyol (Lupranol 3402) |
| 20 g | Polyesterpolyol (Therol 352) |
| 15,0 g | bromiertes Polyol (Fox-O-Pol VD 280s) |
| 5,0 g | Butanol |
| 0,5 g | Zellstabilisator |
| 4 g | Katalysator (Jeffcat ZF 10) |
| 0,4 g | PIR-Katalysator (Catalyst 1b) |
| 0,6 g | Wasser |
| 2 g | hydrophobiertes Siliciumdioxid (Aerosil 200) |
| 18 g | Ammoniumpolyphosphat |
| 3,125 g | Dipentaerythrit |
| 3,125 g | Melamincyanurat |
| 5 g | Eisenoxid |
| 5 g | Zinkborat |
| 30 g | Blähgraphit |

Zur Bildung der Polyisocyanat-Komponente (B) vermischt man die folgenden Bestandteile

| | |
|---|---|
| 89 g | 4,4'-Methylendi(phenylisocyanat) |
| 11 g | Tris(2-chlorisopropyl)-phosphat |

Man bringt die beiden Komponenten in gleich großen Volumina in getrennte Behälter, beispielsweise in eine Zweikomponenten-Kartusche ein.

Beim Vermischen der beiden Komponenten in einem Volumenverhältnis von 1 : 1 erhält man eine aufschäumende Reaktionsmasse, die aufgrund ihrer Viskosität ohne weiteres auch über Kopf in eine zu verschließende Öffnung eingebracht werden kann, wo das Material weiter ausschäumt und aushärtet, so daß man bei einer Einbautiefe von 100 mm in einer Betonwand einen Feuerwiderstand von 3 Stunden nach der ASTM-Vorschrift ASTM 814 erreicht.

## Patentansprüche

1. Zweikomponenten-Ortschaumsystem zur Herstellung eines intumeszierenden Brandchutzschaums mit einer Dichte von weniger als 200 kg/m³ und erhöhter Feuerwiderstandsdauer, mit einer **Polyol-Komponente (A),** die mindestens ein Polyol, einen Katalysator für die Reaktion des Polyols mit dem Polyisocyanat, Wasser oder ein Treibmittel auf der Grundlage eines verdichteten oder verflüssigten Gases als Schaumbildner und mindestens ein intumeszierendes Material auf der Grundlage eines Säurebildners, einer Kohlenstoff liefernden Verbindung und eines Gasbildners enthält, und einer **Polyisocyanat-Komponente (B),** die mindestens ein Polyisocyanat enthält, **dadurch gekennzeichnet, daß** die Polyol-Komponente (A) mindestens ein Polyesterpolyol, mindestens ein Aminopolyol, mindestens ein halogenhaltiges Polyol, mindestens einen Säurebildner, Blähgraphit und mindestens einen Aschekrustenstabilisator enthält, wobei die Mengenverhältnisse der Polyolen und Polyisocyanat(en) so abgestimmt sind, daß sich beim bestimmungsgemäßen Vermischen der Polyol-Komponente (A) mit der Polyisocyanat-Komponente (B) ein Molverhältnis von Isocyanatgruppen des Polyisocyanats zu OH-Gruppen der Polyole (NCO:OH-Verhaltnis) von großer als 1:1 ergibt.

2. Zweikomponenten-Ortschaumsystem nach Anspruch 1, **dadurch gekennzeichnet, daß** die Polyol-Komponente (A) 3 bis 40 Gew.-% Polyesterpolyol, 3 bis 30 Gew.-% Aminopolyol, 5 bis 20 Gew.-% halogenhaltiges Polyol, 5 bis 30 Gew.-% Säurebildner, 1 bis 20 Gew.-% Kohlenstoff liefernde Verbindung, 1 bis 10 Gew.-% mindestens einer Melaminverbindung als Gasbildner und 10 bis 40 Gew.-% Blähgraphit enthält.

3. Zweikomponenten-Ortschaumsystem nach Anspruch 1 oder 2, **dadurch gekennzeichnet, daß** Polyol-Komponente (A) ein Polyesterpolyol mit einer Funktionalität von 1,5 bis 5 und einer OH-Zahl von 100 bis 700, ein Aminopolyol mit einer Funktionalität von 2 bis 5 und einer OH-Zahl von 200 bis 700 und ein halogenhaltiges, vorzugsweise bromiertes Polyol mit einer Funktionalität von 2 bis 5 und einer OH-Zahl von 100 bis 500 und die Polyisocyanät-Komponente (B) ein Polyisocyanat mit einer Funktionalität von >2 und einem NCO-Gehalt von 20 bis 40% enthält.

4. Zweikomponenten-Ortschaumsystem nach den Ansprüchen 1 bis 3, **dadurch gekennzeichnet, daß** als Säurebildner ein Salz oder ein Ester einer anorganischen, nichtflüchtigen Säure ausgewählt aus Schwefelsäure, Phosphorsaure und Borsäure enthalten ist.

5. Zweikomponenten-Ortschaumsystem nach Anspruch 4, **dadurch gekennzeichnet, daß** als Säurebildner Ammoniumphosphat, Ammoniumpolyphosphat, ein Diaminphosphat, ein Ester der Phosphorsaure mit einem Polyol, wie Pentaerythrit, ein Melaminphosphat, wie Melaminmonoorthophosphat, Dimelaminorthophosphat, Dimelaminpyrophosphat oder Melaminpolyphosphat, ein Borsäuresalz, insbesondere Melaminborat, und/oder ein Borsäureester enthalten ist.

6. Zweikomponenten-Ortschaumsystem nach mindestens einem der Ansprüche vorhergehenden Anspruche, **dadurch gekennzeichnet, daß** die Polyol-Komponente (A) 1 bis 20 Gew.-%, vorzugsweise 2,5 bis 10 Gew.-% eines Aschekrustenstabilisators enthält.

7. Zweikomponenten-Ortschaumsystem nach Anspruch 6, **dadurch gekennzeichnet, daß** als Aschekrustenstabilisator ein teilchenförmiges Metall aus der Aluminium, Magnesium, Eisen und Zink umfassenden Gruppe enthalten ist.

8. Zweikomponenten-Ortschaumsystem nach Anspruch 7, **dadurch gekennzeichnet, daß** das teilchenformige Metall in Form eines Pulvers, von Plättchen, Schuppen, Fasern, Fäden und/oder Whiskers vorliegt.

9. Zweikomponenten-Ortschaumsystem nach Anspruch 8, **dadurch gekennzeichnet, daß** das teilchenförmige Metall in Form von Pulver, Plättchen oder Schuppen eine Teilchengroße von ≤ 50µm aufweist.

10. Zweikomponenten-Ortschaumsystem nach Anspruch 9, **dadurch gekennzeichnet, daß** das teilchenförmige Metall eine Teilchengroße von 0.5 bis 10 µm aufweist.

11. Zweikomponenten-Ortschaumsystem nach Anspruch 9, **dadurch gekennzeichnet, daß** die Fasern, Fäden und/oder Whiskers des teilchen-formige Metalls eine Dicke von 0,5 bis 10 µm und eine Lange von 10 bis 50 µm aufweisen.

12. Zweikomponenten-Ortschaumsystem nach Anspruch 6, **dadurch gekennzeichnet, daß** als Aschekrustenstabilisator ein Oxid der eine Verbindung eines Metalls aus der Aluminium, Magnesium, Eisen und Zink umfassenden Gruppe enthalten ist.

13. Zweikomponenten-Ortschaumsystem nach Anspruch 12, **dadurch gekennzeichnet, daß** als Aschekrustenstabilisator Eisenoxid, vorzugsweise Fe₂O₃, Titandioxid, ein Borat, wie Zinkborat, und/oder eine Glasfritte aus einem niedrigschmelzenden Glas, vorzugsweise mit einer Schmelztemperatur ≥ 400°C enthalten ist.

14. Zweikomponenten-Ortschaumsystem nach mindestens einem der Ansprüche vorhergehenden Ansprüche, **dadurch gekennzeichnet, daß** als Kohlenstoff liefernde Verbindung eine Polyhydroxyverbindung und/oder ein thermoplastisches oder duroplastisches polymeres Harzbindemittel enthalten ist.

15. Zweikomponenten-Ortschaumsystem nach Anspruch 14, **dadurch gekennzeichnet, daß** als Kohlenstoff liefernde Verbindung ein Kohlenhydrat, wie Zucker oder Stärke, Pentaerythrit, Dipentaerythrit, ein Phenol-harz, ein Harnstoffharz, ein Polyurethan, Polyvinylchlorid, ein Poly-(meth)acrylat, Polyvinylacetat, Polyvinylalkohol, ein Silikonharz, ein Polybutadien, ein Polybuten und/oder ein Kautschuk enthalten ist.

16. Zweikomponenten-Ortschaumsystem nach mindestens einem der vorhergehenden Ansprüche, **dadurch gekennzeichnet, daß** die Polyol-Komponente (A) als Gasbildner Chlorparaffin, Melamin, eine Melaminverbindung, insbesondere Melamincyanurat, Melaminphosphat, Melaminpolyphosphat, Tris(hydroxyethyl)-cyanurat, Dicyandiamid und/oder ein Guanidinsalz, insbesondere Guanidinphosphat oder Guanidinsulfat, enthält.

17. Zweikomponenten-Ortschaumsystem nach mindestens einem der vorhergehenden Ansprüche, **dadurch gekennzeichnet, daß** die Polyol-Komponente (A) als Katalysator für die Reaktion des Polyols mit dem Polyisocyanat ein aromatisches und/oder aliphatisches sekundäres oder tertiäres Amin, eine metallorganische Verbindung eines Metalls aus der Zn, Sn, Mn, Mg, Bi, Sb, Pb und Ca umfassenden Gruppe, insbesondere ein Octoat, Naphthenat oder Acetylacetonat enthält.

18. Zweikomponenten-Ortschaumsystem nach mindestens einem der vorhergehenden Ansprüche, **dadurch gekennzeichnet, daß** die Polyol-Komponente (A) und/oder die Polyisocyanat-Komponente (B) als Treibmittel auf der Grundlage eines verdichteten oder verflüssigten Gases Luft, Stickstoff, Kohlendioxid, Distickstoffoxid, einen fluorierten Kohlenwasserstoff, wie Freon 134a oder 227, Dimethylether, Butan oder Propan enthält.

19. Zweikomponenten-Ortschaumsystem nach mindestens einem der vorhergehenden Ansprüche, **dadurch gekennzeichnet, daß** die Polyol-Komponente (A) und/oder die Polyisocyanat-Komponente (B) ein zusätzliches organisches oder anorganisches Flammschutzmittel enthält.

20. Zweikomponenten-Ortschaumsystem nach Anspruch 17, **dadurch gekennzeichnet, daß** als Flammschutzmittel roter Phosphor, eine Phosphorverbindung, insbesondere ein halogenierter Posphorsaureester, wie Trichlorethylphosphat, Tris(2-chlorisopropyl)-phosphat, Triphenylphosphat oder Tris(2-chlorethyl)-phosphat, ein Metallhydroxid, insbesondere Aluminiumhydroxid oder Magnesiumhydroxid, Zinkborat und Ammoniumpolyphosphat, sowie gegebenenfalls Antimonoxid als Synergist enthalten ist.

21. Zweikomponenten-Ortschaumsystem nach mindestens einem der vorhergehenden Ansprüche, **dadurch gekennzeichnet, daß** die Polyol-Komponente (A) und/oder die Polyisocyanat-Komponente (B) ein Thixotropiermittel und/oder ein Verdunnungs- oder Losemittel enthält.

22. Zweikomponenten-Ortschaumsystem nach Anspruch 21, **dadurch gekennzeichnet, daß** als Thixotropiermittel hydrophobe oder hydropho bierte Kieselsäure enthalten ist.

23. Zweikomponenten-Ortschaumsystem nach Anspruch 21, **dadurch gekennzeichnet, daß** als Verdünnungs- oder Losemittel ein aliphatischer Alkohol, wie Butanol, enthalten ist.

24. Zweikomponenten-Ortschaumsystem nach mindestens einem der vorhergehenden Ansprüche, **dadurch gekennzeichnet, daß** die Polyol-Komponente (A) und/oder die Polyisocyanat-Komponente (B) zusätzlich mindestens einen anorganischen Füllstoff enthält.

25. Zweikomponenten-Ortschaumsystem nach Anspruch 21, **dadurch gekennzeichnet, daß** es als anorganischen Füllstoff ein Metalloxid, ein Borat, ein Carbonat, vorzugsweise Kreide, ein Silikat, Kaolin, Glaspulver, Eisenoxid, Titandioxid, Siliciumdioxid, einen anorganischen Schaum, vorzugsweise geschäumten Blähton, Perlite und Vermiculit, und/oder Hohlkügelchen aus silikatischem Material oder Glas enthält.

26. Zweikomponenten-Ortschaumsystem nach mindestens einem der vorhergehenden Anspruche, **dadurch gekennzeichnet, daß** die Polyol-Komponente (A) und/oder die Polyisocyanat-Komponente (B) zusätzlich an sich bekannte Hilfs- und Zusatzstoffe, Stabilisatoren, Weichmacher, Katalysatoren, Losungsmittel und/oder Farbstoffe enthält.

27. Zweikomponenten-Ortschaumsystem nach mindestens einem der vorhergehenden Anspruche, **dadurch gekennzeichnet, daß** die Polyol-Komponente (A) und die Polyisocyanat-Komponente (B) in einer Zwei- oder Mehrkammervorrichtung reaktionsinhibierend getrennt und unter Anwendungsbedingungen unter Einhaltung des NCO:OH-Verhaltnisses von größer als 1:1 zur Reaktion bringbar enthalten sind.

28. Verwendung des Zweikomponenten-Ortschaumsystems nach den Ansprüchen 1 bis 27 zum Auschäumen von Öffnungen, Kabel- und Rohrdurchfuhrungen in Wänden. Böden und/oder Decken von Gebäuden zum Zwecke des Brandschutzes.

## Claims

1. Two-component local foaming system for the manufacture of an intumescent fire protection foam with a density of less than 200 kg/m³ and increased fire resistance time, with a **polyol component (A)** which contains at least one polyol, a catalyst for the reaction of the polyol with the polyisocyanate, water or a propellant based on a compressed or liquefied gas as frother, and at least one intumescent material based on an acidifier, a compound supplying carbon and a gasifier, and with a **polyisocyanate component (B)** which contains at least one polyisocyanate, **characterised in that** the polyol component (A) contains at least one aminopolyol, at least one halogenic polyol, at least one acidifier, swelling graphite and at least one ash crust stabiliser, wherein the volumetric proportions of the polyols and polyisocyanate(s) are matched so that a mol ratio of isocyanate groups of the polyisocyanate to OH groups of the polyols [NCO:OH ratio) greater than 1:1 is obtained when the polyol component (A) is mixed with the polyisocyanate component (B) according to the applicable regulations.

2. Two-component local foaming system according to Claim 1, **characterised in that** the polyol component (A) contains 3 to 40% by weight of polyester polyol, 3 to 30% by weight of aminopolyol, 5 to 20% by weight of halogenic polyol, 5 to 30% by weight of acidifier, 1 to 20% by weight of compound supplying carbon, 1 to 10% by weight of at least one melamine compound as gasifier, and 10 to 40% by weight of swelling graphite.

3. Two-component local foaming system according to Claim 1 or 2, **characterised in that** polyol component (A) contains a polyester polyol with a functionality of 1.5 to 5 and an OH count of 100 to 700, an amino polyol with a functionality of 2 to 5 and an OH number of 200 to 700, and a halogenic, preferably brominated polyol with a functionality of 2 to 5 and an OH number of 100 to 500, and **in that** the polyisocyanate component (B) contains a polyisocyanate with a functionality of > 2 and an NCO content of 20 to 40%.

4. Two-component local foaming system according to Claims 1 to 3, **characterised in that** a salt or ester of an inorganic, non-volatile acid selected from sulphuric acid, phosphoric acid and boric acid is contained as an acidifier.

5. Two-component local foaming system according to Claim 4, **characterised in that** ammonium phosphate, ammonium polyphosphate, a diamine phosphate, an ester of the phosphoric acid with a polyol such as pentaerythrite, a melamine phosphate such as melamine monoorthophosphate, dimelamine orthophosphate, dimelamine pyrophosphate or melamine polyphosphate, a boric acid salt, in particular melamine borate, and/or a boric acid ester, is contained as an acidifier.

6. Two-component local foaming system according to at least one of the preceding claims, **characterised in that** the polyol component (A) contains 1 to 20% by weight, preferably 2.5 to 10% by weight of an ash crust stabiliser.

7. Two-component local foaming system according to Claim 6, **characterised in that** a metal from the group including aluminium, magnesium, iron and zinc, in particle form, is contained as ash crust stabiliser.

8. Two-component local foaming system according to Claim 7, **characterised in that** the particulate metal is present in the form of a powder, platelets, scales, fibres, filaments and/or whiskers.

9. Two-component local foaming system according to Claim 8, **characterised in that** the particulate metal, in the form of powder, platelets or scales, exhibits a particle size of ≤ 50 µm.

10. Two-component local foaming system according to Claim 9, **characterised in that** the particulate metal exhibits a particle size of 0.5 to 10 µm.

11. Two-component local foaming system according to Claim 9, **characterised in that** the fibres, filaments and/or whiskers of the particulate metal exhibit a thickness of 0.5 to 109 µ and a length of 10 to 30 µm.

12. Two-component local foaming system according to Claim 6, **characterised in that** an oxide or a compound of a metal from the group including aluminium, magnesium, iron and zinc is contained as an ash crust stabiliser.

13. Two-component local foaming system according to Claim 12, **characterised in that** iron oxide, preferably Fe₂O₃, titanium dioxide, a borate such as zinc borate, and/or a glass frit from a low melting glass, preferably with a melting temperature ≥ 400°C, is contained as the ash crust stabiliser.

14. Two-component local foaming system according to at least one of the preceding claims, **characterised in that** a polyhydroxy compound and/or a thermoplastic or duroplastic polymeric resin bonding agent is contained as the compound supplying carbon.

15. Two-component local foaming system according to Claim 14, **characterised in that** a carbohydrate, such as sugar or starch, pentaerythrite, dipentaerythrite, a phenol resin, a urea resin, a polyurethane, polyvinyl chloride, a poly(meth)acrylate, polyvinyl acetate, polyvinyl alcohol, a silicone resin, a polybutadiene, a polybutene and/or a rubber is contained as the compound supplying carbon.

16. Two-component local foaming system according to at least one of the preceding claims, **characterised in that** the polyol component (A) contains, as a gasifier, chloroparaffin, melamine, a melamine compound, in particular melamine cyanurate, melamine phosphate, melamine polyphosphate, tris(hydroxyethyl)-cyanurate, dicyan diamide and/or a guanidine salt, in particular guanidine phosphate or guanidine sulphate.

17. Two-component local foaming system according to at least one of the preceding claims, **characterised in that** the polyol component (A) contains, as catalyst for the reaction of the polyol with the polyisocyanate, an aromatic and/or aliphatic secondary or tertiary amine, a metalorganic compound of a metal from the group including Zn, Sn, Mn, Mg, Bi, Sb, Pb and Ca, in particular an octoate, naphthenate or acetyl acetonate.

18. Two-component local foaming system according to at least one of the preceding claims, **characterised in that** the polyol component (A) and/or the polyisocyanate component (B) contains, as propellant based on a compressed or liquefied gas, air, nitrogen, carbon dioxide, dinitrous oxide, a fluorinated hydrocarbon such as Freon 134a or 227, dimethyl ether, butane or propane.

19. Two-component local foaming system according to at least one of the preceding claims, **characterised in that** the polyol component (A) and/or the polyisocyanate component (B) contains an additional organic or inorganic flame retardant.

20. Two-component local foaming system according to Claim 17, **characterised in that** red phosphorus, a phosphorus compound, in particular a halogenated phosphoric acid ester such as trichloroethyl phosphate, tris(2-chloroisopropyl)-phosphate, triphenyl phosphate or tris(2-chloroethyl)-phosphate, a metal hydroxide, in particular aluminium hydroxide or magnesium hydroxide, zinc borate and ammonium polyphosphate, and if necessary antimony oxide as synergist, is contained as the flame retardant.

21. Two-component local foaming system according to at least one of the preceding claims, **characterised in that** the polyol component (A) and/or the polyisocyanate component (B) contains a thixotropising agent and/or a diluent or solvent.

22. Two-component local foaming system according to Claim 21, **characterised in that** hydrophobic or hydrophobised silicic acid is contained as the thixotropising agent.

23. Two-component local foaming system according to Claim 21, **characterised in that** an aliphatic alcohol such as butanol is contained as the diluent or solvent.

24. Two-component local foaming system according to at least one of the preceding claims, **characterised in that** the polyol component (A) and /or the polyisocyanate component (B) also contains at least one inorganic filler.

25. Two-component local foaming system according to Claim 21, **characterised in that** it contains, as inorganic filler, a metal oxide, a borate, a carbonate, preferably chalk, a silicate, kaolin, glass powder, iron oxide, titanium dioxide, silicon dioxide, an inorganic foam, preferably foamed swelling clay, perlite and vermiculite, and/or small hollow balls of silicatic material or glass.

26. Two-component local foaming system according to at least one of the preceding claims, **characterised in that** the polyol component (A) and/or the polyisocyanate component (B) also contains auxiliary substances, stabilisers, plasticizers, catalysts, solvents and/or dyes of prior art.

27. Two-component local foaming systems according to at least one of the preceding claims, **characterised in that** the polyol component (A) and/or the polyisocyanate component (B) are contained separately in a two- or multi-chamber device so that they can be applied to the reaction and inhibit it, under application conditions, whilst maintaining the NCO:OH ratio exceeding 1:1.

28. Use of the two-component local foaming system according to Claims 1 to 27 for filling cavities, cable and pipe openings in walls, floors and/or ceilings of buildings for the purpose of fire protection.

## Revendications

1. Système moussant local à deux composants pour la préparation d'une mousse de protection contre les incendies avec une masse volumique de moins de 200 kg/m³ et une durée de résistance au feu augmentée, ayant un **composant polyol (A),** qui contient au moins un polyol, un catalyseur pour la réaction du polyol avec le polyisocyanate, de l'eau ou un moyen de propulsion à base d'un gaz comprimé ou liquéfié comme agent de formation de mousse et au moins un matériau intumescent à base d'un précurseur d'acide, un composé fournissant des hydrocarbures et un précurseur de gaz, et un composant polyisocyanate (B), qui contient au moins un polyisocyanate, **caractérisé en ce que** le composant polyol (A) contient au moins un polyesterpolyol, au moins un aminopolyol, au moins un polyol halogéné, au moins un précurseur d'acide, un graphite gonflant et au moins un stabilisateur de croûte de cendres, dans lequel les rapports en quantités des polyols et du ou des polyisocyanates sont adaptés afin que, pour le mélange prescrit du composant polyol (A) avec le composant polyisocyanate (B), l'on obtienne un rapport en moles de groupes isocyanate du polyisocyanate par rapport aux groupes OH des polyols (rapport NCO:OH) supérieur à 1:1.

2. Système moussant local à deux composants selon la revendication 1, **caractérisé en ce que** le composant de polyol (A) contient de 3 à 40 % en poids de polyesterpolyol, de 3 à 30 % en poids d'aminopolyol, de 5 à 20 % en poids de polyol halogéné, de 5 à 30 % en poids de précurseur d'acide, de 1 à 20 % en poids de composé délivrant des hydrocarbures, de 1 à 10 % en poids au moins d'un composé de mélamine comme précurseur de gaz et de 10 à 40 % en poids de graphite gonflant.

3. Système moussant local à deux composants selon la revendication 1 ou 2, **caractérisé en ce que** le composant de polyol (A) avec une fonctionnalité de 1,5 à 5 et un indice OH de 100 à 700, contient un aminopolyol avec une fonctionnalité de 2 à 5 et un indice OH de 200 à 700 et un polyol halogéné, de préférence bromé avec une fonctionnalité de 2 à 5 et un indice OH de 100 à 500 et le composant de polyisocyanate (B) contient un polyisocyanate avec une fonctionnalité de > 2 et une teneur en NCO de 20 à 40 %.

4. Système moussant local à deux composants selon les revendications 1 à 3, **caractérisé en ce qu'**il contient comme précurseur d'acide un sel ou un ester d'un acide inorganique, non volatil choisi parmi l'acide sulfurique, l'acide phosphorique et l'acide borique.

5. Système moussant local à deux composants selon la revendication 4, **caractérisé en ce qu'**il contient comme précurseur d'acide le phosphate d'ammonium, le polyphosphate d'ammonium, un phosphate de diamine, un ester d'acide phosphorique avec un polyol, comme le pentaérythritol, un phosphate de mélamine, comme le monoorthophosphate de mélamine, orthophosphate de dimélamine, le pyrophosphate de dimélamine ou le polyphosphate de mélamine, un sel d'acide borique, en particulier le borate de mélamine et/ou un ester d'acide borique.

6. Système moussant local à deux composants selon au moins l'une des revendications précédentes, **caractérisé en ce que** le composant polyol (A) contient de 1 à 20 % en poids, de préférence de 2,5 à 10 % en poids d'un stabilisateur de croûte de cendres.

7. Système moussant local à deux composants selon la revendication 6, **caractérisé en ce qu'**il contient comme stabilisateur de croûte de cendres un métal en forme de particules d'aluminium, magnésium, fer et zinc.

8. Système moussant local à deux composants selon la revendication 7, **caractérisé en ce que** le métal en forme de particules se présente sous la forme d'une poudre, de plaquettes, de paillettes, de fibres, de fils et/ou de whiskers.

9. Système moussant local à deux composants selon la revendication 8, **caractérisé en ce que** le métal particulaire sous la forme de poudre, de plaquettes ou de paillettes présente une taille de particules de ≤ 50 µm.

10. Système moussant local à deux composants selon la revendication 9, **caractérisé en ce que** le métal en forme de particules présente une taille de particules de 0,5 à 10 µm.

11. Système moussant local à deux composants selon la revendication 9, **caractérisé en ce que** les fibres, fils et/ou whiskers du métal particulaire présentent une épaisseur de 0,5 à 10 µm et une longueur de 10 à 50 µm.

12. Système moussant local à deux composants selon la revendication 6, **caractérisé en ce qu'**il contient comme stabilisateur de croûte de cendres un oxyde ou un composé d'un métal du groupe aluminium, magnésium, fer et zinc.

13. Système moussant local à deux composants selon la revendication 12, **caractérisé en ce qu'**il contient comme stabilisateur de croûte de mousse de l'oxyde de fer, de préférence Fe₂O₃, du dioxyde de titane, un borate, comme le borate de zinc, et/ou du verre fritté à base d'un verre à bas point de fusion, de préférence avec une température de fusion ≥ 400 °C.

14. Système moussant local à deux composants selon au moins l'une des revendications précédentes, **caractérisé en ce qu'**il contient comme composé fournissant des hydrocarbures un composé polyhydroxy et/ou un agent liant de résine polymère thermoplastique ou thermodurcissable.

15. Système moussant local à deux composants selon la revendication 14, **caractérisé en ce qu'**il contient comme composé délivrant des hydrocarbures un hydrate de carbone, comme le sucre ou l'amidon, le pentaérythritol, le dipentaérythritol, une résine phénolique, une résine urée, un polyuréthane, polychlorure de vinyle, un poly(méth)acrylate, polyacétate de vinyle, polyvinylalcool, une résine de silicium, un polybutadiène, un polybutène et/ou un caoutchouc.

16. Système moussant local à deux composants selon au moins l'une des revendications précédentes, **caractérisé en ce que** le composant polyol (A) contient comme précurseur de gaz de la chloroparaffine, mélamine, un composé de mélamine, en particulier le cyanurate de mélamine, le phosphate de mélamine, le polyphosphate de mélamine, le cyanurate de tris(hydroxyéthyle), le dicyandiamide et/ou un sel de guanidine, en particulier le phosphate de guanidine ou le sulfate de guanidine.

17. Système moussant local à deux composants selon au moins l'une des revendications précédentes, **caractérisé en ce que** le composant de polyol (A) contient comme catalyseur pour la réaction du polyol avec le polyisocyanate une amine aromatique et/ou aliphatique secondaire ou tertiaire, un composé métallo-organique d'un métal du groupe comprenant zinc, Sn, Mn, Mg, Bi, Sb, Pb et Ca, en particulier un octoate, naphténate ou acétylacétonate.

18. Système moussant local à deux composants selon au moins l'une des revendications précédentes, **caractérisé en ce que** le composant de polyol (A) et/ou le composant de polyisocyanate (B) comme moyen propulseur à base de gaz comprimé ou liquéfié, contient de l'air, de l'azote, du dioxyde de carbone, oxyde de diazote, un hydrocarbure fluoré, comme le fréon 134a ou 227, le diméthyléther, le butane ou le propane.

19. Système moussant local à deux composants selon au moins l'une des revendications précédentes, **caractérisé en ce que** le composant polyol (A) et/ou le composant polyisocyanate (B) contient un agent de protection contre les incendies additionnel organique ou inorganique.

20. Système moussant local à deux composants selon la revendication 17, **caractérisé en ce qu'**il contient comme agent de synergie un agent de protection contre les incendies du phosphore rouge, un composé du phosphore, en particulier un ester d'acide phosphorique halogéné, comme le trichloroéthylphosphate, tris(2-chloroisopropyl)-phosphate, triphénylphosphate ou tris(2-chloroéthyl)-phosphate, un hydroxyde de métal, en particulier l'hydroxyde d'aluminium ou l'hydroxyde de magnésium, le borate de zinc et le polyphosphate d'ammonium, ainsi qu'éventuellement le monoxyde d'antimoine.

21. Système moussant local à deux composants selon au moins l'une des revendications précédentes, **caractérisé en ce que** le composant de polyol (A) et/ou le composant de polyisocyanate (B) contient un agent de thixotropie et/ou un diluant ou solvant.

22. Système moussant local à deux composants selon la revendication 21, **caractérisé en ce qu'**il contient comme agent de thixotropie des acides siliciques hydrophobes ou rendus hydrophobes.

23. Système moussant local à deux composants selon la revendication 21, **caractérisé en ce qu'**il contient comme diluant ou solvant un alcool aliphatique, comme le butanol.

24. Système moussant local à deux composants selon au moins l'une des revendications précédentes, **caractérisé en ce que** le composant polyol (A) et/ou le composant polyisocyanate (B) contient additionnellement au moins une charge inorganique.

25. Système moussant local à deux composants selon la revendication 21, **caractérisé en ce qu'**il contient comme charge inorganique un oxyde métallique, un borate, un carbonate, de préférence de la craie, un silicate, du kaolin, de la poudre de verre, l'oxyde de fer, le dioxyde de titane, le dioxyde de silicium, une mousse inorganique, de préférence de l'argile gonflante, de la perlite et de la vermiculite, et/ou des billes de bois de matériau ou de verre silicaté.

26. Système moussant local à deux composants selon au moins l'une des revendications précédentes, **caractérisé en ce que** le composant polyol (A) et/ou le composant polyisocyanate (B) contient additionnellement en plus des additifs et adjuvants connus, des stabilisants, adoucissants, catalyseurs, solvants et/ou colorants.

27. Système moussant local à deux composants selon au moins l'une des revendications précédentes, **caractérisé en ce qu'**il contient le composant polyol (A) et le composant polyisocyanate (B) séparément pour inhiber la réaction dans un système à deux chambres ou plus et dans des conditions d'utilisation en maintenant le rapport NCO:OH supérieur à 1:1 pour amorcer la réaction.

28. Utilisation du système moussant local à deux composants selon les revendications 1 à 27 pour le remplissage de cavités, de traversées de câbles et de tuyaux dans les parois, les sols et/ou les plafonds de bâtiments dans le but de la protection contre les incendies.
